# EUROPÄISCHE PATENTSCHRIFT

(11) **EP 1 558 500 B1**
(45) Veröffentlichungstag und Bekanntmachung des Hinweises auf die Patenterteilung: **20.06.2007**
(21) Anmeldenummer: 03773506.5
(22) Anmeldetag: 13.10.2003
(51) Int. Cl.: B65D 77/22

(54) **Verpackungsbehälter mit einem Überdruckventil**
Package with an overpressure valve
Emballage avec soupape de surpression

(30) Priorität: 29.10.2002 DE 10250318
(43) Veröffentlichungstag der Anmeldung: 03.08.2005
(73) Patentinhaber: ROBERT BOSCH GMBH, 70442 Stuttgart (DE)
(72) Erfinder: STOTKIEWITZ, Herbert, 74321 Bietigheim-Bissingen (DE); FISCHER, Thomas, 73630 Remshalden-Geradstetten (DE)
(86) Internationale Anmeldenummer: PCT/DE2003/003387
(87) Internationale Veröffentlichungsnummer: WO 2004/039692

(56) Entgegenhaltungen:
- EP-A- 0 870 697
- DE-A- 19 843 430
- GB-A- 1 583 503
- US-A- 4 420 015
- US-A- 5 727 881

## Beschreibung

Die Erfindung betrifft einen verpackungsbehälter mit einem Überdruckventil nach dem Oberbegriff des Anspruchs 1.

Aus der DE 35 21 373 A1 ist bereits ein derartiges Überdruckventil für einen Verpackungsbehälter bekannt, welches aus einer Grundplatte und einer die Grundplatte überspannenden Membran besteht. In der Membran sind schlitzförmige Gasdurchlassöffnungen ausgebildet, welche bei einem entsprechenden Überdruck in dem Verpackungsbehälter mit einer Durchgangsöffnung in der Grundplatte kommunizieren und so einen Durchgangskanal für das Gas bilden. Das bekannte Überdruckventil für einen Verpackungsbehälter ist dazu vorgesehen, auf der Außenseite des Verpackungsbehälters aufgebracht zu werden.

Es besteht mehr und mehr der Wunsch seitens der Abpacker, derartige Überdruckventile an der Innenseite eines Verpackungsbehälters anzuordnen, so dass das Überdruckventil optisch nicht so stark auffällt und außerdem dadurch von außen praktisch nicht beschädigt werden kann. Das bekannte Überdruckventil gemäß der DE 35 21 373 A1 weist zwar in vorteilhafter Weise einen sehr einfachen Aufbau auf, Hinweise, wie ein derartiges Überdruckventil ausgebildet sein muss, um an der Innenseite eines Verpackungsbehälters angebracht zu werden, sind jedoch nicht vorhanden.

Aus der EP-A-0870697 ist eine luftdicht verschlossene Verpackung bekannt mit einem Vakuumventil. Das Ventil umfasst eine Kappe, ein Basisteil, eine Scheibe aus einem Elastomer, welche zumindest einen Schlitz aufweist, eine dünne Schicht Öl und ein Filterteil. Das Basisteil ist an der Verpackung befestigt. Auf der der Verpackung zugewandten Seite ist die Kappe aufgesetzt, die sich ebenfalls in Richtung zu der Verpackung hin erstreckt.

Aus der GB-A-1583503 ist ein Überdruckventil für einen Verpackungsbehälter bekannt. Zwischen einer Durchtrittsöffnung in der Behälterwand und einer die Durchtrittsöffnung überdeckenden, einen Gasaustritt aufweisenden Abdeckung liegt ein Ventilelement, das in Verbindung mit einer Schicht einer chemisch stabilen und gegen Sauerstoff unempfindlichen Flüssigkeit hoher Kohäsionskraft arbeitet. Das Ventilelement besteht aus einem porösen Element, welches mit einer schwer flüchtigen Flüssigkeit imprägniert und zwischen Behälterwand und Abdeckung randseitig festgelegt ist. Die Ventilwirkung erfolgt durch Aufreißen der Flüssigkeitsschicht in den Poren des porösen Elements bei Überdruck im Behälterinneren.

### Vorteile der Erfindung

Der erfindungsgemäße Verpackungsbehälter mit den kennzeichnenden Merkmalen des Anspruchs 1 hat den Vorteil, dass das Überdruckventil bei sehr einfachem und daher kostengünstiger Herstellung an der Innenseite des Verpackungsbehälters angeordnet ist.

Vorteilhafte Weiterbildungen des erfindungsgemäßen Verpackungsbehälters sind in den Unteransprüchen angegeben. Ein besonders niedriger Öffnungsdruck des Überdruckdruckventils lässt sich erreichen, wenn die wenigstens eine Durchlassöffnung in der Grundplatte die Form zweier sich schneidender Kreise aufweist. Um die Membran in einem einfachen Herstellungsverfahren mit der Grundplatte zu verbinden ist in einer vorteilhaften Ausführungsform vorgesehen, die Membran aus zwei miteinander verbundenen Schichten auszubilden, wobei an der einen Schicht ein umlaufender Rand frei gelassen ist, welcher mit der Grundplatte verklebt wird. In einer weiteren bevorzugten Ausführungsform ist vorgesehen, die Außenkonturen der einzelnen Bestandteile des Überdruckventils im Wesentlichen rechteckförmig auszubilden, so dass sich die Überdruckventile durch Übereinanderanordnen von Bahnen ausbilden lassen, wobei die einzelnen Überdruckventile anschließend aus der Verbundbahn nur ausgestanzt werden müssen, wobei relativ wenig Abfall anfällt.

### Zeichnung

Ein Ausführungsbeispiel der Erfindung ist in der Zeichnung dargestellt und wird nachfolgend näher erläutert. Es zeigen:
Figur 1 einen Querschnitt durch einen erfindungsgemäßen Verpackungsbehälter mit einem Überdruckventil welches an der Innenseite einer Packstoffwand angeordnet ist,
Figuren 2 jeweils ein Verbindungselement in Draufsicht, welches entweder zum Verkleben mit der Packstoffinnenwand, oder zum Ultraschallverschweißen geeignet ist,
Figur 3 die Draufsicht auf eine Membran,
Figur 4 eine Seitenansicht der Membran nach Figur 3 und
Figur 5 eine Draufsicht auf eine Verbundbahn, aus der die einzelnen Überdruckventile austrennbar sind.

### Beschreibung des Ausführungsbeispiels

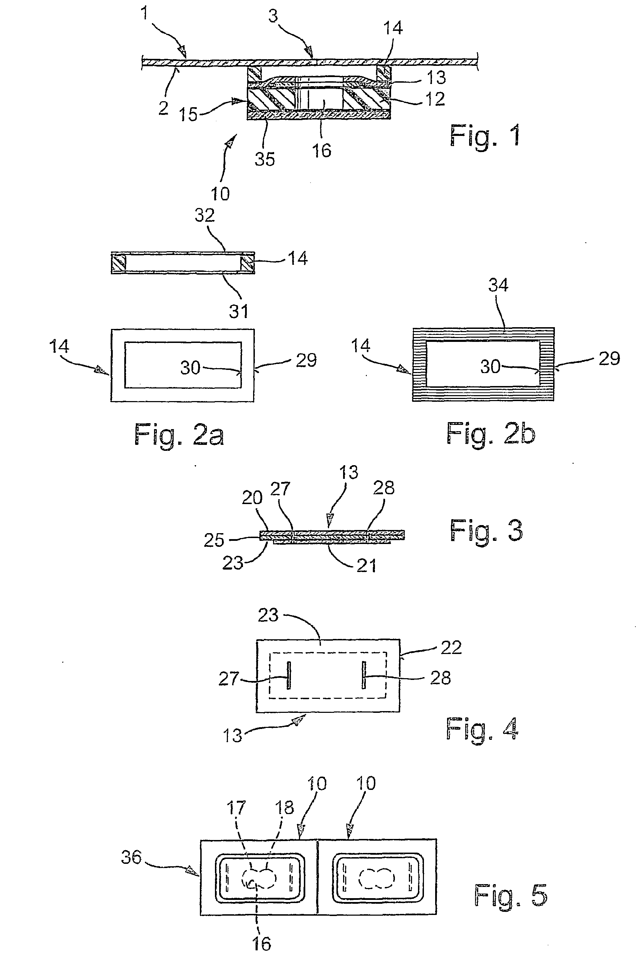

Das in der Figur 1 dargestellte Überdruckventil 10 dient dazu, in einem nicht dargestellten Verpackungsbehälter unter Überdruck stehendes Gas aus dem Verpackungsbehälter auszuleiten, um eine Zerstörung des Verpackungsbehälters zu vermeiden. Das Überdruckventil 10 ist vorzugsweise zum Einsatz in Kaffeeverpackungen vorgesehen, wobei der Verpackungsbehälter aus flexiblem, heißsiegelfähigem Packstoff besteht. Das Überdruckventil 10 ist dabei an einer Packstoffinnenseite 2 einer Packstoffbahn 1 befestigt. Aus einem Abschnitt der Packstoffbahn 1 lässt sich anschließend der angesprochene und nicht dargestellte Verpackungsbehälter derart formen, dass das Überdruckventil 10, wie erwähnt, an der Innenseite des Verpackungsbehälters angeordnet ist.

Wesentlich ist, dass an der Packstoffbahn 1 im Bereich des Überdruckventils 10 wenigstens eine Entlüftungsmöglichkeit in Form wenigstens eines Loches 3 oder wenigstens eines Schlitzes vorgesehen ist. Das Ausbilden derartiger Löcher 3 bzw. Schlitze ist bereits Stand der Technik und wird daher nicht näher erläutert.

Das Überdruckventil 10 besteht aus drei Bauteilen, einer Grundplatte 12, einer Membran 13 und einem Verbindungselement 14. Die auf der der Packstoffinnenseite 2 abgewandten Seite angeordnete Grundplatte 12 weist in Draufsicht eine in etwa rechteckige Außenkontur 15 auf und besteht vorzugsweise aus PET (Polyethylentherephtalat) mit einer Dicke von ca. 200 µm. Mittig in der Grundplatte 12 ist eine Durchlassöffnung 16 in Form zweier sich schneidender Kreise 17, 18 ausgebildet (Figur 5).

Auf der der Packstoffinnenseite 2 zugewandten Oberseite der Grundplatte 12 ist die Membran 13 aufgeklebt. Entsprechend den Figuren 3 und 4 besteht die Membran 13 aus zwei Schichten 20, 21. Die Außenkontur 22 der der Grundplatte 12 abgewandten Schicht 20 weist dieselbe Form und Größe auf wie die Außenkontur 15 der Grundplatte 12. Die der Grundplatte 12 zugewandte Schicht 21 weist eine geringere Größe auf als die Schicht 20, derart, dass zwischen den beiden übereinander angeordneten Schichten 20, 21 ein umlaufender Rand 23 ausgebildet ist, in welchem lediglich die Schicht 20 vorhanden ist.

Die beiden Schichten 20, 21 sind mittels einer Kleberschicht 25 miteinander verbunden, welche vollflächig auf der Schicht 20 aufgetragen ist, so dass der Rand 23 ebenfalls die Kleberschicht 25 aufweist. In dem Überdeckungsbereich der beiden Schichten 20, 21 sind in der Membran 13 beispielsweise zwei längliche Schlitze 27, 28 zueinander beabstandet angeordnet. Die beiden Schlitze 27, 28 können entweder durch einen Schneid- oder einen Stanzvorgang hergestellt werden, wobei jedoch auch eine andere Form, Anzahl oder Größe von Schlitzen bzw. Durchbrüchen denkbar ist. Die beiden Schichten 20, 21 bestehen ebenfalls aus PET mit einer Dicke von jeweils ca. 25 µm und die Kleberschicht 25 weist eine Dicke von ca. 20 µm auf. Infolge der geringen Dicke der Membran 13 weist diese senkrecht zu ihrer Erstreckungsebene eine gewisse Flexibilität bzw. Biegbarkeit auf.

Die Membran 13 ist im Bereich des Randes 23 mittels der Kleberschicht 25 mit der zugewandten Seite der Grundplatte 12 verbunden.

Auf der Membran 13 ist auf der der Packstoffinnenseite zugewandten Seite das Verbindungselement 14 angeordnet. Das Verbindungselement 14 besteht aus PET mit einer Dicke von ca. 200 µm und weist eine Außenkontur 29 entsprechend der Außenkonturen 15, 22 der Grundplatte 12 bzw. der Membran 13 auf. Innerhalb des Verbindungselements 14 ist eine rechteckige Aussparung 30 ausgebildet, deren Form und Größe in etwa der der Schicht 21 der Membran 13 entspricht. Das Verbindungselement 14 besteht aus PET mit einer Dicke von ca. 200 µm.

Bei einer ersten Ausführungsform entsprechend der Figur 2a ist sowohl die Ober- als auch die Unterseite des Verbindungselements 14 vollflächig jeweils mit einer Kleberschicht 31, 32 versehen. Während die eine Kleberschicht 31 dazu dient, das Verbindungselement 14 mit der Membran 13 zu verbinden, wird über die andere Kleberschicht 32 das Verbindungselement 14 mit der zugewandten Packstoffinnenseite 2 vollflächig (mit Ausnahme der Aussparung 30) verklebt.

Bei einer anderen Ausführungsform gemäß der Figur 2b ist zwar ebenfalls eine Kleberschicht 31 vorhanden, jedoch ist die der Packstoffinnenseite 2 zugewandte Oberseite des Verbindungselements 14 mit der Riffelung 34 versehen, so dass die Verbindung des Überdruckventils 10 mit der Packstoffinnenseite 2 mittels eines Ultraschallschweißvorgangs erfolgt.

Das soweit beschriebene Überdruckventil 10 eignet sich insbesondere dann, wenn relativ grobkörnige Lebensmittel, welche bei ihrer Lagerung Gas produzieren, in dem Verpackungsbehälter abgepackt sind. Beispielhaft sind hier ganze Kaffeebohnen genannt. Wird hingegen relativ feinkörniges Füllgut verpackt, beispielsweise gemahlener Kaffee, so ist es erforderlich, zu vermeiden, dass das Füllgut in den Bereich der Durchlassöffnung 16 gelangt. In diesem Fall ist, wie in der Figur 1 dargestellt, auf der der Membran 13 abgewandten Seite der Grundplatte 12 ein zusätzliches Filterelement 35 vollflächig mit der Grundplatte 12 verbunden. Das Filterelement 35 ist derart ausgebildet, dass ein Durchtritt von Gas in die Durchlassöffnung 16 aus dem Packungsinneren erfolgen kann, wozu das Filterelement 35 beispielsweise aus Filterpapier oder Flies oder aus dünnem, gelochtem Kunststoffmaterial bestehen kann.

Bezüglich der Funktion des Überdruckventils 10 wird erwähnt, dass im Packungsinneren entstehendes Gas, ggf. nach Durchtritt durch das Filterelement 35, in die Durchlassöffnung 16 gelangt. Bei einem bestimmten Überdruck des Gases hebt sich die Membran 13 nach und nach ab, wobei ein Kanal für das Gas zwischen der Durchlassöffnung 16 und dem oder den Schlitzen 27, 28 entsteht. Nachdem das Gas 10 die Schlitze 27, 28 passiert hat, gelangt es durch das Loch 3 in die Umgebung. Sobald der Überdruck im Packungsinneren durch Austritt des Gases reduziert ist, legt sich die Membran 13 wieder an die Grundplatte 12 an und dichtet dieses nach außen hin ab.

Um die Abdichtung der Membran 13 zur Grundplatte 12 hin zu verbessern, um insbesondere auch den Eintritt von Luftsauerstoff aus der Umgebung in das Packungsinnere zu vermeiden, ist, wie allgemein üblich und bekannt und daher nicht dargestellt vorgesehen, zwischen der Membran 13 und der Grundplatte 12 im Bereich der Schicht 21 ein Dichtmittel, insbesondere Silikonöl anzuordnen.

Derartige beschriebene Überdruckventile 10 lassen sich rationell besonders einfach herstellen, wenn diese direkt aneinander angrenzend aus einem Folienverbund angeordnet und anschließend ausgetrennt bzw. ausgestanzt werden können. Hierzu zeigt die Figur 5 beispielhaft mehrere nebeneinander angeordnete Überdruckventile 10, bevor diese aus einem Folienverbund 36 separiert werden. Der Folienverbund 36 besteht aus mehreren Schichten, die jeweils Grundplatten 12, Membrane 13 sowie Verbindungselemente 14 ausbilden.

## Patentansprüche

1. Verpackungsbehälter mit einem Überdruckventil (10), mit einer, mit einer Wand (1) des Verpackungsbehälters verbundenen, wenigstens eine Durchlassöffnung (16) aufweisenden Grundplatte (12), die von einer, wenigstens einen Durchlass (27, 28) aufweisenden Membran (13) teilweise überdeckt ist, welche in ihren Randbereichen (23) zumindest teilweise mit der Grundplatte (12) verbunden ist, so dass bei einem Überdruck in dem Verpackungsbehälter durch Abheben der Membran (13) von der Grundplatte (12) ein Kanal von der wenigstens einen Durchlassöffnung (16) in der Grundplatte (12) zu dem wenigstens einen Durchlass (27, 28) entsteht, um Gas aus dem Verpackungsbehälter durch eine Öffnung (3) in der Wand (1) auszuleiten, wobei das Überdruckventil (10) mit einer, die Innenseite (2) des Verpackungsbehälters bildenden Wand (1) verbunden ist, **dadurch gekennzeichnet, dass** auf der der Innenseite (2) zugewandten Seite der Grundplatte (12) ein Verbindungselement (14) angeordnet ist, welches eine geschlossene Kontur aufweist, wobei der wenigstens eine Durchlass (27, 28) in der Membran (13),innerhalb der Kontur des Verbindungselements (14) angeordnet ist, wobei das Verbindungselement (14) auf der der Innenseite (2) des Verpackungsbehälters zugewandten Seite der Membran (13) angeordnet ist und mit der die Innenseite (2) des Verpackungsbehälters bildenden Wand (1) verbunden ist.

2. Verpackungsbehälter nach Anspruch 1, **dadurch gekennzeichnet, dass** der wenigstens eine Durchlass als Schlitz (27, 28) ausgebildet ist.

3. Verpackungsbehälter nach Anspruch 1 oder 2, **dadurch gekennzeichnet, dass** die wenigstens eine Durchlassöffnung (16) in der Grundplatte (12) die Form zweier sich schneidender Kreise (17, 18) aufweist.

4. Verpackungsbehälter nach einem der Ansprüche 1 bis 3, **dadurch gekennzeichnet, dass** die Membran (13) die Grundplatte (12) vollständig überdeckt und in einem umlaufenden Randbereich auf der der Grundplatte (12) zugewandten Seite vollflächig mit der Grundplatte (12) verbunden ist.

5. Verpackungsbehälter nach Anspruch 4, **dadurch gekennzeichnet, dass** die Membran (13) zwei aus flexiblem Kunststoff bestehende Schichten (20, 21) aufweist, die mittels einer Kleberschicht (25) miteinander vollflächig verbunden sind, wobei die der Grundplatte (12) zugewandte Schicht (20) der Membran (13) einen umlaufenden Rand (23) an der anderen Schicht (21) der Membran (13) freilässt, der mit der Grundplatte (12) verbunden ist.

6. Verpackungsbehälter nach Anspruch 5, **dadurch gekennzeichnet, dass** der wenigstens eine Durchlass (27, 28) in dem Überdeckungsbereich der beiden Schichten (20, 21) der Membran (13) ausgebildet ist.

7. Verpackungsbehälter nach einem der Anspruche 1 bis 6, **dadurch gekennzeichnet, dass** das Verbindungselement (14) auf der der Grundplatte (12) abgewandten Seite eine beispielsweise geriffelte Oberfläche (34) aufweist, so dass das Verbindungselement (14) gegen die Innenseite (2) des Verpackungsbehälters mittels Ultraschallschweißung verbindbar ist.

8. Verpackungsbehälter nach einem der Ansprüche 1 bis 6, **dadurch gekennzeichnet, dass** das Verbindungselement (14) auf der der Grundplatte (12) abgewandten Seite eine Kleberschicht (32) aufweist und gegen die Innenseite (2) des Verpackungsbehälters klebbar ist.

9. Verpackungsbehälter nach einem der Ansprüche 1 bis 8, **dadurch gekennzeichnet, dass** sowohl die Grundplatte (12), als auch die Membran (13) und das Verbindungselement (14) jeweils eine in Draufsicht identische, rechteckige Außenkontur (15, 22, 29) aufweisen.

## Claims

1. Packaging container having a pressure relief valve (10), with a baseplate (12) which is connected to a wall (1) of the packaging container and has at least one passage orifice (16) and which is partially covered by a diaphragm (13) which has at least one passage (27, 28) and which is at least partially connected in its edge regions (23) to the baseplate (12), so that, in the event of excess pressure in the packaging container, a duct from the at least one passage orifice (16) in the baseplate (12) to the at least one passage (27, 28) occurs due to the diaphragm (13) being lifted off from the baseplate (12), in order to conduct gas out of the packaging container through an orifice (3) in the wall (1), the pressure relief valve (10) being connected to a wall (1) forming the inside (2) of the packaging container, **characterized in that** on that side of the baseplate (12) which faces the inside (2), a connection element (14) is arranged, which has a closed contour, the at least one passage (27, 28) in the diaphragm (13) being arranged within the contour of the connection element (14), the connection element (14) being arranged on that side of the diaphragm (13) which faces the inside (2) of the packaging container and being connected to the wall (1) forming the inside (2) of the packaging container.

2. Packaging container according to Claim 1, **characterized in that** the at least one passage is designed as a slit (27, 28).

3. Packaging container according to Claim 1 or 2, **characterized in that** the at least one passage orifice (16) in the baseplate (12) is in the form of two intersecting circles (17, 18).

4. Packaging container according to one of Claims 1 to 3, **characterized in that** the diaphragm (13) completely covers the baseplate (12) and in a peripheral edge region is connected over the entire area to the baseplate (12) on the side facing the baseplate (12).

5. Packaging container according to Claim 4, **characterized in that** the diaphragm (13) has two layers (20, 21) which consist of flexible plastic and which are connected to one another over the entire area by means of an adhesive layer (25), that layer (20) of the diaphragm (13) which faces the baseplate (12) leaving free, on the other layer (21) of the diaphragm (13), a peripheral edge (23) which is connected to the baseplate (12).

6. Packaging container according to Claim 5, **characterized in that** the at least one passage (27, 28) is formed in the overlap region of the two layers (20, 21) of the diaphragm (13).

7. Packaging container according to one of Claims 1 to 6, **characterized in that** the connection element (14) has a, for example, grooved surface (34) on the side facing away from the baseplate (12), so that the connection element (14) can be connected against the inside (2) of the packaging container by means of ultrasonic welding.

8. Packaging container according to one of Claims 1 to 6, **characterized in that** the connection element (14) has an adhesive layer (32) on the side facing away from the baseplate (12) and can be glued against the inside (2) of the packaging container.

9. Packaging container according to one of Claims 1 to 8, **characterized in that** both the baseplate (12) and the diaphragm (13) and the connection element (14) have in each case a rectangular outer contour (15, 22, 29) which is identical in a top view.

## Revendications

1. Emballage comprenant une soupape de surpression (10), une plaque de base (12) reliée à une paroi (1) de l'emballage et présentant au moins une ouverture de passage (16) recouverte partiellement par une membrane (13) ayant au moins un passage (27, 28) et assemblée au moins partiellement à la plaque de base (12) dans ses zones de bord (23), de sorte que, en cas de surpression dans l'emballage, un canal depuis l'ouverture de passage (16) dans la plaque de base (12) jusqu'au passage (27, 28) se forme par soulèvement de la membrane (13) de la plaque de base (12) afin d'évacuer du gaz hors de l'emballage à travers une ouverture (3) dans la paroi (1), la soupape de surpression (10) étant reliée à une paroi (1) formant la face intérieure (2) de l'emballage,
**caractérisé en ce qu'**
sur la face de la plaque de base (12) tournée vers la face intérieure (2), un élément de liaison (14) présente un contour fermé, le passage (27, 28) dans la membrane (13) étant situé à l'intérieur du contour de l'élément de liaison (14), et l'élément de liaison (14) disposé sur la face de la membrane (13) tournée vers la face intérieure (2) de l'emballage est relié à la paroi (1) formant la face intérieure (2) de l'emballage.

2. Emballage selon la revendication 1,
**caractérisé en ce qu'**
au moins un passage est formé par une fente (27, 28).

3. Emballage selon la revendication 1 ou 2,
**caractérisé en ce qu'**
au moins une ouverture de passage (16) dans la plaque de base (12) présente la forme de deux cercles qui se coupent (17, 18).

4. Emballage selon l'une quelconque des revendications 1 à 3,
**caractérisé en ce que**
la membrane (13) recouvre entièrement la plaque de base (12) et est assemblée à la plaque de base (12) sur toute la surface dans une zone de bord périphérique sur la face tournée vers la plaque de base (12).

5. Emballage selon la revendication 4,
**caractérisé en ce que**
la membrane (13) comprend deux couches (20, 21) composées d'une matière plastique flexible, et assemblées l'une à l'autre sur toute la surface au moyen d'une couche de colle (25), dont la couche (20) de la membrane (13) tournée vers la plaque de base (12) laisse libre sur l'autre couche (21) de la membrane (13) un bord périphérique (23), qui est assemblé à la plaque de base (12).

6. Emballage selon la revendication 5,
**caractérisé en ce qu'**
au moins un passage (27, 28) est formé dans la zone de recouvrement des deux couches (20, 21) de la membrane (13).

7. Emballage selon l'une quelconque des revendications 1 à 6,
**caractérisé en ce que**
l'élément de liaison (14) présente une surface striée (34) sur la face située à l'opposé de la plaque de base (12), de sorte que l'élément de liaison (14) puisse être assemblé contre la face intérieure (2) de l'emballage par soudage aux ultrasons.

8. Emballage selon l'une quelconque des revendications 1 à 6,
**caractérisé en ce que**
l'élément de liaison (14) présente une couche de colle (32) sur la face située à l'opposé de la plaque de base (12) et peut être collé contre la face intérieure (2) de l'emballage.

9. Emballage selon l'une quelconque des revendications 1 à 8,
**caractérisé en ce qu'**
aussi bien la plaque de base (12) que la membrane (13) et l'élément de liaison (14) présentent chaque fois, dans une vue en plan, un contour extérieur rectangulaire identique (15, 22, 29).
